# DEMANDE DE BREVET EUROPEEN

(11) **EP 1 013 207 A1**
(43) Date de publication de la demande: **28.06.2000**
(21) Numéro de dépôt: 99403208.4
(22) Date de dépôt: 17.12.1999
(51) Int. Cl.: A47J 37/12

(54) **Friteuse électrique**

(30) Priorité: 24.12.1998 FR 9816754
(71) Demandeur: Moulinex S.A., 13123 Cormelles-le-Royal (FR)
(72) Inventeur: Bois, Bernard, La folie couvrechef, 14000 Caen (FR)
(74) Mandataire: Busquets, Jean-Pierre

(57) **Abrégé**

Friteuse électrique comportant un boîtier (1) recevant une cuve de cuisson (2) ayant un fond (3) et une paroi latérale (4), destinée à contenir un bain de friture et chauffée par une résistance électrique chauffante (5) agencée sous le fond (3) de ladite cuve et définissant une zone chaude limitée pratiquement à la zone de son contact avec ledit fond.

Selon l'invention, le fond (3) de la cuve (2) comporte un collecteur (8) de récupération du reliquat de bain de friture après vidange de la cuve, ledit collecteur (8) étant agencé à distance de la zone chaude de la résistance chauffante (5).

## Description

La présente invention se rapporte aux friteuses électriques comportant un boîtier recevant une cuve de cuisson ayant un fond et une paroi latérale, destinée à contenir un bain de friture et chauffée par une résistance électrique chauffante agencée sous le fond de ladite cuve et définissant une zone chaude limitée pratiquement à la zone de son contact avec ledit fond.

Dans les friteuses de ce genre, la résistance électrique chauffante présente une puissance élevée de l'ordre de 2000 watts afin de garantir un bain de friture adéquat aux environs de 180°C permettant de réussir une cuisson parfaite des aliments qui y sont plongés et immergés.

Comme un tel bain de friture est composé d'un corps gras liquide hautement inflammable dans des conditions anormales d'utilisation de la friteuse, il a déjà été proposé d'équiper de telles friteuses de dispositifs de sécurité qui sont plus particulièrement destinés à couper l'alimentation électrique de la résistance lorsque la cuve ne contient pas suffisamment d'huile ou de graisse. Il existe également une situation plus pernicieuse due à la vidange de la cuve et pour laquelle en fin d'opération seul un film d'huile reste attaché momentanément sur les parois de la cuve et notamment la paroi latérale, ledit film s'écoulant très lentement sur le fond de la cuve pour former une pellicule de corps gras.

Dans ces conditions, on comprendra que si l'utilisateur a laissé ou met par mégarde en fonctionnement la friteuse, la résistance électrique porte rapidement la région du fond de cuve limitée à la zone chaude de ladite résistance à une température telle que le reliquat du corps gras atteint son point éclair aux environs de 330°C/340°C et provoque l'inflammation spontanée de ce reliquat ; inflammation qui peut dans certaines circonstances d'implantation de la friteuse sur un plan de travail occasionner un début d'incendie.

La présente invention a pour but de proposer une friteuse ne présentant pas cet inconvénient et répondant aux normes de sécurité dictées par certains pays.

Selon l'invention, le fond de la cuve comporte un collecteur de récupération du reliquat de bain de friture après vidange de la cuve, ledit collecteur étant agencé à distance de la zone chaude de la résistance électrique.

Ainsi, le collecteur remplit correctement sa fonction de récupération et de mise à l'abri du reliquat hors de la zone chaude de la résistance et évite donc au film de corps gras de s'enflammer si la résistance électrique est alimentée.

Selon une autre caractéristique importante de l'invention, la résistance chauffante comporte deux éléments d'extrémité conformés chacun en un tronçon froid par rapport au reste de la résistance et donc par rapport à la zone chaude de la résistance, et le collecteur est agencé aux environs desdits tronçons froids.

Une telle conformité des extrémités de la résistance en zone froide permet à la fois d'optimiser le chauffage sur la majeure partie du fond de la cuve permettant une circulation d'huile chaude dans la cuve, et de garantir une zone dite froide empêchant l'apparition du point éclair de la pellicule de corps gras stagnant dans le collecteur.

Les caractéristiques et avantages de l'invention ressortiront d'ailleurs de la description qui va suivre, à titre d'exemple non limitatif, en référence aux dessins annexés dans lesquels :
- la figure 1 est une vue schématique en perspective et en coupe verticale d'une friteuse comportant une cuve selon un premier mode de réalisation et selon l'invention;
- la figure 2 représente schématiquement en vue de dessus une cuve de friteuse selon un autre mode de réalisation et selon l'invention;
- la figure 3 est une coupe simplifiée de la ligne III-III de la figure 2;
- la figure 4 est une coupe simplifiée selon la ligne IV-IV de la figure 2.

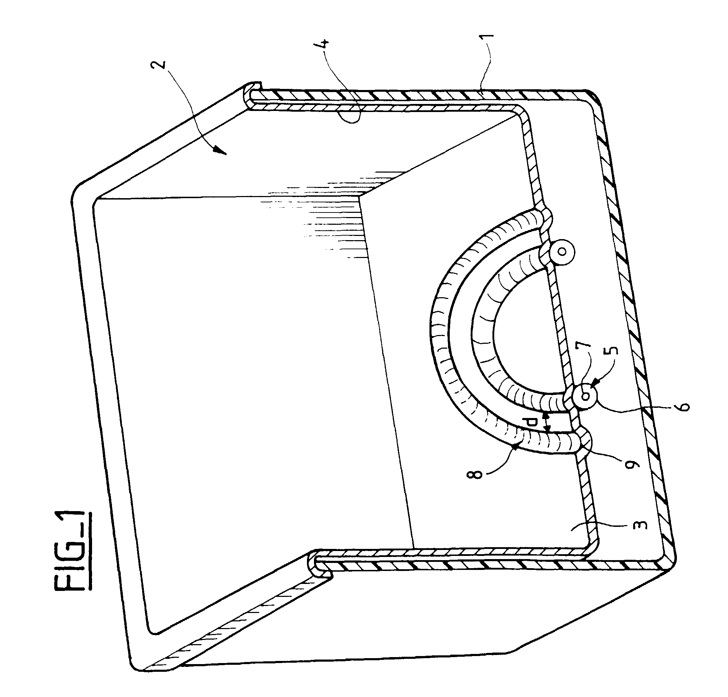

Dans l'exemple de réalisation illustré à la figure 1, la friteuse est représentée schématiquement par un boîtier 1 recevant une cuve de cuisson 2 destinée à contenir un bain de friture (non représenté) composé soit de graisse, soit d'huile. Cette cuve comprend un fond 3 et une paroi latérale 4 qui peut présenter soit une forme parallélipipédique comme illustrée, soit une forme cylindrique non représentée. Cette cuve peut être réalisée en aluminium ou en tôle émaillée.

Sous le fond 3 de la cuve est agencée une résistance électrique chauffante 5 qui définit une zone chaude limitée pratiquement à la zone en contact avec ledit fond. La cuve 2 peut être soit montée amovible dans le boîtier 1 et repose sur la résistance 5 qui est alors supportée par le boîtier, soit montée fixe dans ce boîtier et la résistance 5 est alors solidaire du fond 3 de la cuve 2.

La résistance électrique chauffante 5 peut être, par exemple, un bloc chauffant incorporant un élément chauffant de tout type ou une piste sérigraphiée, mais est de préférence du type blindée comportant un corps tubulaire 6 en métal renfermant un fil chauffant 7 isolé de ce corps par un matériau isolant tel que la magnésie.

Comme illustré sur cette figure 1, la résistance chauffante 5 s'étend sur le fond 3 de la cuve selon un tracé circulaire et la zone chaude dont on se réfère est dans ce cas définie par la zone de contact ou de liaison du corps tubulaire 6 avec le fond 3 de la cuve 2, cette zone de contact s'étendant à la région située au droit de cette résistance ainsi qu'aux régions mitoyennes de cette dernière.

Selon l'invention, le fond 3 de la cuve 2 comporte un collecteur 8 de récupération du reliquat de bain de friture après vidange de la cuve, ledit collecteur étant agencé à distance (d)de la zone chaude de la résistance électrique 5. En se reportant à la figure 1, on voit que le collecteur 8 est formé par une dépression 9 pratiquée dans le fond 3 et agencée entre la paroi latérale 4 et la zone chaude de la résistance chauffante 5. Cette dépression 9 présente la forme préférentielle d'une rigole qui court à distance (d) du tracé circulaire de cette résistance.

Pour parfaire la collecte du reliquat d'huile séjournant sur le fond 3, ce dernier peut présenter une zone centrale légèrement surélevée par rapport à la surface restante du fond de manière à permettre un meilleur écoulement vers la rigole 9, ou une légère dépression pratiquée dans la zone centrale interne à la résistance.

Ainsi, lorsque l'utilisateur procède à la vidange de la cuve, il pense, une fois cette opération accomplie, avoir vidé complètement le contenu de corps gras (huile ou graisse) de cette cuve. Or, normalement sur la paroi latérale de la cuve, un film d'huile reste accroché par capillarité. Si l'utilisateur a laissé ou met en fonctionnement par mégarde la friteuse, l'huile va rapidement se liquéfier et s'écouler vers le fond de sorte que ce reliquat va se rassembler et être contenu dans le collecteur 8 à l'abri de la zone chaude de la résistance chauffante. On comprendra donc que ce reliquat n'atteindra jamais sa température d'inflammation spontanée. Grâce à l'invention, on réalise également une sécurité de fonctionnement dans le cas où après vidange et lors d'une autre opération de friture, l'utilisateur mettra sa friteuse en marche sans ajouter d'huile.

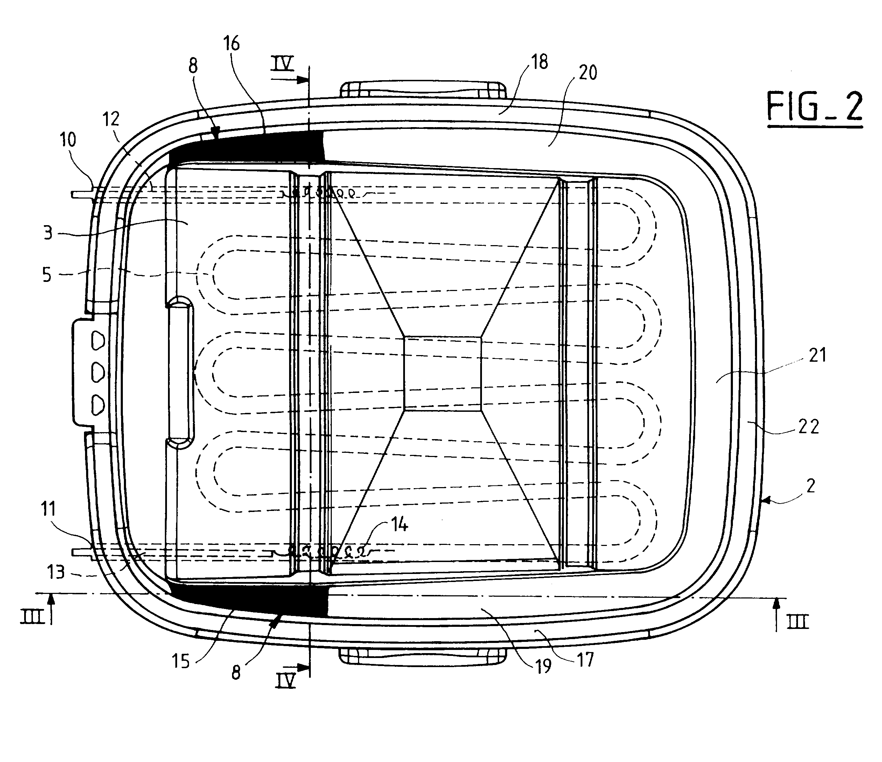

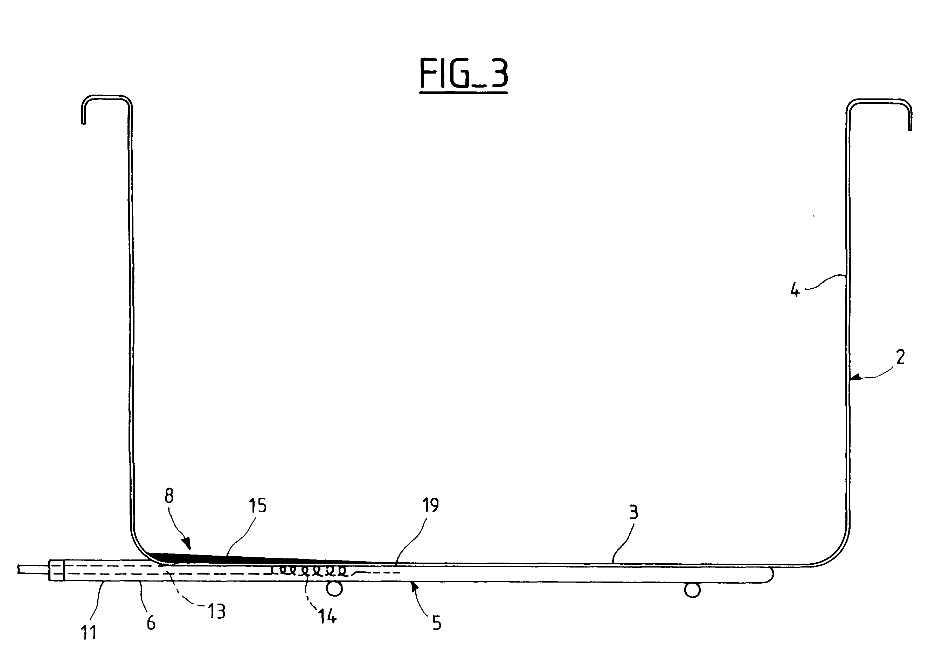

Dans l'exemple de réalisation représenté aux figures 2 à 4 et dans lesquelles on a gardé les mêmes références pour désigner des éléments semblables, la résistance électrique chauffante 5 est également une résistance du type blindée mais s'étend selon un tracé sinueux (représentation en pointillés sur la figure 2) sur le fond 3 de la cuve 2 et présente deux éléments d'extrémité 10 et 11 situés d'un même côté à savoir sur une même face latérale de la paroi latérale 4.

La paroi latérale 4 présente également une forme paralléllépipédique et la résistance 5 s'étend pratiquement sur toute la surface du fond 3.

La résistance 5 selon l'invention, comporte deux éléments d'extrémité 10 et 11 conformés chacun en un tronçon froid par rapport au reste du corps tubulaire de la résistance et donc par rapport à la zone chaude de ladite résistance 5.

Chaque tronçon froid est réalisé par une broche 12, 13 non chauffante raccordée, d'une part, au fil résistant et chauffant 14, et d'autre part à un bloc de commande (non représenté) de l'alimentation électrique de la résistance 5.

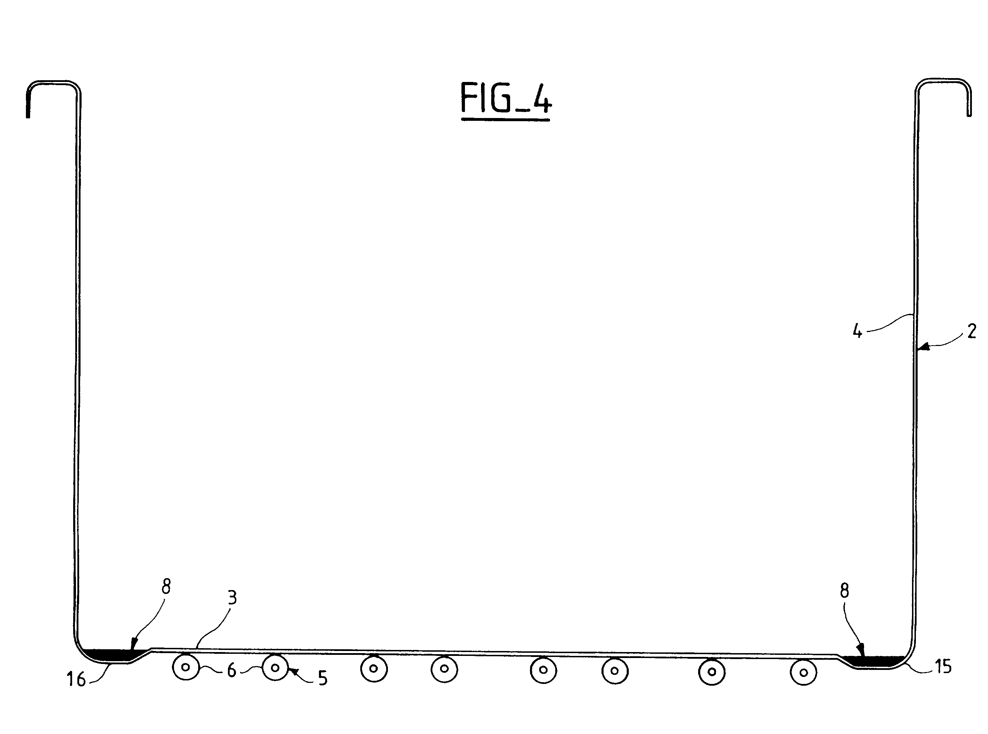

Selon une caractéristique importante de l'invention, le collecteur 8 est agencé aux environs des tronçons froids 10 et 11. Comme on le voit mieux sur la figure 4, le collecteur 8 de récupération du reliquat de bain de friture est formé par au moins une dépression, dans le cas présent par deux dépressions 15 et 16 (représentées en grisé) pratiquées dans le fond 3 de la cuve 2 et situées respectivement latéralement aux tronçons froids 10 et 11 de la résistance chauffante 5 à une distance suffisante pour éviter à ce reliquat de corps gras d'atteindre son point éclair d'inflammation. Ces dépressions 15 et 16 sont agencées respectivement entre lesdits tronçons froids et les faces latérales opposées 17 et 18 de la paroi latérale 4 voisines desdits tronçons.

Pour garantir le remplissage de ces dépressions 15 et 16, la présente invention prévoit en outre de créer des pentes 19, 20 pratiquées dans le fond 3 et latéralement aux deux faces opposées 17 et 18 et orientées vers le bas en direction desdites dépressions 15 et 16. Ces dépressions présentent donc chacune une forme d'auge longitudinale et étroite. Une légère pente 21 agencée transversalement aux pentes 18 et 19 permet de récolter le film de la face latérale 21 en se rattachant auxdite pentes.

Cette réalisation permet en outre de répartir de façon symétrique la collecte du reliquat et permet donc de réaliser par emboutissage des dépressions peu profondes entraînant ainsi une économie de fabrication et une plus grande robustesse du fond de la cuve.

## Revendications

1. Friteuse électrique comportant un boîtier (1) recevant une cuve de cuisson (2) ayant un fond (3) et une paroi latérale (4), destinée à contenir un bain de friture et chauffée par une résistance électrique chauffante (5) agencée sous le fond (3) de ladite cuve et définissant une zone chaude limitée pratiquement à la zone de son contact avec ledit fond,
**caractérisée en ce que** le fond (3) de la cuve (2) comporte un collecteur (8) de récupération du reliquat de bain de friture après vidange de la cuve, ledit collecteur (8) étant agencé à distance de la zone chaude de la résistance chauffante (5).

2. Friteuse électrique selon la revendication 1,
**caractérisée en ce que** la résistance chauffante (5) s'étendant sur le fond (3) de cuve (2) selon un tracé circulaire, le collecteur est formé par une dépression (9) pratiquée dans le fond (3) et agencée entre la paroi latérale (4) et la zone chaude de ladite résistance chauffante (5).

3. Friteuse électrique selon la revendication 2,
**caractérisée en ce que** la dépression (9) présente la forme d'une rigole qui court à distance du tracé circulaire de la résistance chauffante (5).

4. Friteuse électrique selon la revendication 1,
**caractérisée en ce que** la résistance chauffante (5) comporte deux éléments d'extrémité (10 et 11) conformés chacun en un tronçon froid par rapport au reste de la résistance et donc par rapport à la zone chaude de la résistance (5), et le collecteur (8) est agencé aux environs de l'un au moins desdits tronçons froids (10, 11) .

5. Friteuse électrique selon la revendication 4,
**caractérisée en ce que** le collecteur (8) est formé par au moins une dépression (15, 16) pratiquée dans le fond (3) de la cuve (2) et située latéralement à l'un desdits tronçons froids (10, 11) de la résistance chauffante (5) à une distance suffisante pour éviter toute inflammation du reliquat.

6. Friteuse électrique selon la revendication 5,
**caractérisée en ce que** le collecteur (8) est formé par deux dépressions (15 et 16) présentant chacune une forme d'auge longitudinale et étroite et situées respectivement entre les tronçons froids (10 et 11) et la paroi latérale (4).

7. Friteuse électrique selon l'une quelconque des revendications précédentes,
**caractérisée en ce que** la résistance chauffante (5) est du type blindée comportant un corps tubulaire (6) renfermant un fil chauffant (7) isolé de ce corps par un matériau isolant.

8. Friteuse électrique selon la revendication 4 et la revendication 7,
**caractérisée en ce que** les deux éléments d'extrémité (10 et 11) conformés en des tronçons froids sont réalisés respectivement par une broche (12, 13) non chauffante raccordée au fil résistant et chauffant (14).
